# FASCICULE DE BREVET EUROPEEN

(11) **EP 1 756 379 B1**
(45) Date de publication et mention de la délivrance du brevet: **30.03.2016**
(21) Numéro de dépôt: 05766574.7
(22) Date de dépôt: 22.04.2005
(51) Int. Cl.: B32B 3/26, E04B 1/76, E04D 13/16, B32B 27/12, B32B 27/14, E04D 12/00

(54) **ISOLANT MINCE REFLECHISSANT POUR SOUS-TOITURE**
DÜNNE REFLEXIONSINSOLIERUNG FÜR EINE DACHUNTERLAGE
THIN REFLECTIVE INSULATION FOR ROOF UNDERLAY

(30) Priorité: 17.06.2004 FR 0406584
(43) Date de publication de la demande: 28.02.2007
(73) Titulaire: ICOPAL SAS, 92184 Antony Cedex (FR)
(72) Inventeur: PION, Jean-François, F-92500 Rueil Malmaison (FR); JOUFFRAULT, Marc, 95470 Vémars (FR); HUE, Bernard, F-94430 Chennevieres-sur-marne (FR)
(74) Mandataire: Cabinet Armengaud Aîné
(86) Numéro de dépôt international: PCT/FR2005/001005
(87) Numéro de publication internationale: WO 2006/008351

(56) Documents cités:
- EP-A- 1 209 298
- EP-A- 1 400 348
- DE-U1-202004 007 543
- US-A- 4 988 406

## Description

L'invention est relative à un isolant thermique souple, mince et réfléchissant, utilisable sous forme de feuille ou de nappe pour tous types de bâtiments, convenant à la fois aux travaux neufs ou aux travaux de rénovation, notamment pour améliorer une ancienne isolation maintenue en place.

De tels isolants thermiques existent depuis quelques années et permettent notamment de contribuer à l'isolation thermique des parois en raison de la faible émissivité hémisphérique des surfaces réfléchissantes associées à des lames d'air non ventilées.

Ces isolants thermiques comportent tous des parements extérieurs réfléchissants constitués par des feuilles métalliques ou plastiques métallisées totalement étanches à l'eau et présentent une très forte résistance au passage de la vapeur d'eau.

Lorsque ces isolants sont utilisés en complément d'une isolation thermique existant conservée - ce qui est très souvent le cas lors de travaux de rénovation - et sont placés du côté extérieur (« côté froid ») d'une paroi de bâtiment donnant sur l'extérieur, l'évacuation de l'humidité contenue dans le volume intérieur du bâtiment ne peut plus se faire. Cette humidité est alors susceptible de s'accumuler sur la face interne de ces isolants minces réfléchissants en raison de la plus grande perméabilité à la vapeur d'eau des cloisons intérieures, de l'isolation thermiques existante ou dans certains cas en l'absence de paré-vapeur. Ainsi, dans certaines circonstances de température et d'humidité, de fines gouttelettes d'eau peuvent se former au contact de l'isolant thermique réfléchissant (point de rosée) et retomber vers l'intérieur du bâtiment, notamment sur la couche d'isolant thermique conservée, ou sur la structure porteuse ce qui, à la longue, est susceptible de générer des dégradations structurelles importantes.

Pour éviter les inconvénients décrits ci-dessus, ces isolants thermiques souples minces et réfléchissants sont donc positionnés du côté intérieur d'un bâtiment en faisant office de pare-vapeur, ce qui les exclut d'une utilisation en rénovation d'ouvrage par l'extérieur.

En outre, des études réalisées dans les principaux laboratoires européens ont montré, pour ces isolants, que leur performance d'isolation thermique intrinsèque était limitée à leur épaisseur (R en m².K/W comprise entre 0,30 à 0,90 m²K/W) mais que la résistance thermique R en m².K/W (mètre carré. degré Kelvin par watt) de la paroi dans laquelle ils sont installés s'accroît (R comprise entre 0,80 à 1,20 m²K/W) lorsqu'ils sont associés à des lames d'air inertes. Cependant, la résistance thermique globale R de ces parois ne permet pas de répondre aux exigences d'isolation requises par la Réglementation Thermique en vigueur dans la plupart des pays européens. En conséquence, ces isolants thermiques souples minces et réfléchissants ne peuvent être utilisés que comme des compléments.

La présente invention a pour but, surtout, de fournir un isolant thermique du genre défini précédemment qui permet d'éviter les inconvénients rappelés ci-dessus, et qui notamment peut être utilisé en complément d'une isolation thermique en place conservée, en étant installé par l'extérieur sans créer une condensation nuisible tant en paroi verticale qu'en toiture.

Dans cette configuration, l'isolant assure également les fonctions d'un écran souple de sous-toiture à Haute Perméabilité à la Vapeur d'eau (écran H.P.V).

L'application de l'invention concerne surtout un usage en toiture pour une application par l'extérieur au-dessus d'une charpente qui lui sert de support.

Selon l'invention, l'isolant thermique souple, mince et réfléchissant, est caractérisé en ce qu'il comprend au moins trois éléments constitués par un parement extérieur et un parement intérieur réfléchissants respirant, séparés par une couche intercalaire constituée d'un matelas ouvert au passage de la vapeur d'eau, les deux parements extérieur et intérieur étant différents et constitués d'un parement réfléchissant respirant étanche à l'eau situé vers l'extérieur, et d'un parement respirant non étanche à l'eau dirigé vers l'intérieur du bâtiment - côté chaud.

Par le terme « respirant » on désigne un parement qui est perméable à la vapeur d'eau mais qui peut être étanche à l'eau notamment sous forme de gouttes d'eau.

De préférence, l'isolant thermique souple, mince réfléchissant possède des parements dont la réflectivité est suffisante pour renvoyer une partie du rayonnement infra rouge thermique qu'ils reçoivent sur chacune des faces.

En été, le rayonnement infra rouge thermique provenant de la couverture est réfléchi dans une lame d'air ventilée ménagée entre la couverture et l'isolant mince permettant une réduction sensible du facteur solaire de la toiture, améliorant le confort d'été des occupants du bâtiment, évitant ainsi la surchauffe du volume intérieur.

En hiver le rayonnement infra rouge thermique provenant de l'intérieur chauffé est réfléchi vers le volume habitable situé en dessous contribuant ainsi à limiter les pertes thermiques.

Avantageusement, les parements extérieurs de l'isolant mince réfléchissant ont une émissivité hémisphérique moyenne spectrale ε généralement de 0,1 mais de préférence inférieure à 0,02 mesurée dans la bande de longueurs d'onde comprise entre 3 µm et 25 µm pour une température comprise entre 20°C et 60°C. La réflectivité moyenne est au minimum de 90%, de préférence supérieure à 98 %, de l'énergie totale reçue.

Le parement extérieur de l'isolant thermique peut être constitué d'au moins une feuille étanche à l'eau avec une perméabilité à la vapeur d'eau importante caractérisée par une valeur de perméance W exprimée en kg/m².s.Pa (kilo par mètre carré. seconde. Pascals) comprise entre 1.10⁻⁸ et 1.10⁻⁹ kg/m².s. Pa soit une hauteur d'air équivalente définie par la valeur Sd exprimée en mètre comprise entre 1.10⁻²m et 20.10⁻²m.

La feuille peut être obtenue à partir de fibres synthétiques entrelacées avec d'infimes «espaces micrométriques» entre les fibres permettant le passage des molécules de vapeur d'eau tout en restant étanche à l'eau.

Avantageusement, cette feuille a une épaisseur comprise entre 100 µm et 300 µm et une masse surfacique entre 50 g/m² et 120 g/m². La feuille peut être obtenue à partir de fibres de matière synthétique à base de polyéthylène, ou toute autre matière synthétique présentant des propriétés analogues.

Dans un autre mode de réalisation, la feuille étanche à l'eau peut être constituée d'une très fine couche micro-poreuse se présentant sous forme d'un film contenant des micro-particules poreuses de silicate de chaux ou de toute autre, matière poreuse analogue, dont l'épaisseur est généralement comprise entre 10 µm et 40 µm, avec une masse surfacique comprise entre 10g/m² et 40 g/m².

Selon une autre variante la feuille est constituée d'une membrane perméable de nature chimique dite hydrophilique.

Avantageusement, les feuilles. étanches à l'eau décrites ci-dessus constituant les parements de l'isolant mince sont rendues faiblement émissives par un traitement approprié d'une des faces de ces feuilles consistant en la dépose sous vide d'une couche de fines particules métalliques protégées par une laque transparente spécifique afin d'éviter une oxydation rapide de leur surface qui réduirait sa réflectivité tout en préservant leur perméance.

Selon une première variante, le parement extérieur réfléchissant de l'isolant comporte deux faces traitées faiblement émissives

Selon un autre mode de réalisation le parement extérieur de l'isolant mince est une feuille composite comportant une première feuille réfléchissante possédant une très faible émissivité et une seconde feuille étanche à l'eau du genre de celles décrites ci-dessus mais ne comportant pas de traitement en vue de la rendre faiblement émissives

Dans un premier exemple, la feuille réfléchissante de la feuille composite ci-dessus est une feuille métallique réfléchissante en particulier en aluminium, ou tout autre métal ayant des propriétés de réflexion similaires à celles de l'aluminium .

Avantageusement cette feuille métallique est renforcée par des compléments associés par collage ou tout autre moyen équivalent ayant pour but de conférer à cette feuille métallique des propriétés mecaniques.

Selon une première disposition, la feuille métallique est associée à un film plastique armé multicouche transparent.

Selon une seconde disposition, la feuille métalliques est associée à une armature telle qu'une grille plastique dont les fils de chaîne et les fils de trame sont judicieusement répartis afin d'en optimiser les performances

Selon une troisième disposition, la feuille métallique réfléchissante est associée à une armature constituée d'un film non tissé de fibres synthétiques.

Dans un second exemple, la feuille réfléchissante de la feuille composite ci-dessus est constituée d'un film réfléchissant multicouche armé.

Ce film réfléchissant multicouche armé est composé d'une première couche, formant l'un des parements, constituée d'un film plastique ayant reçu sur l'une de ses faces un dépôt sous vide de fines particules métalliques, et d'une seconde couche formant l'autre parement constituée d'un autre film transparent.

Entre ces couches, est inséré une armature constituée d'une grille en matière plastique afin de conférer à ce film réfléchissant les propriétés mécaniques recherchées.

Les parements et l'armature sont assemblés entre eux au moyen d'une couche de collage extrudée entre les deux parements et l'armature; alors que le film extrudé est encore en fusion, une pression exercée de part et d'autre par une calandre assure le collage et l'assemblage final.

En variante la seconde couche formant l'autre parement et l'armature peuvent être remplacées par un film non tissé de fibres synthétiques possédant les propriétés mécaniques similaires à celles de la grille plastique

Les matières plastiques utilisées pour les films plastiques constituant les parements, la grille ou le film non tissé de fibres synthétiques sont composées de polymères courants tels le polyester, le polyéthylène, le polypropylène, ou tout autre polymère ayant des propriétés analogues utilisés seuls ou en combinaison.

Un tel film réfléchissant multicouches armé a une épaisseur totale comprise entre 60 et 200 microns, préférablement de 170 microns et une masse comprise entre 60 et 250 g/m², préférablement de 170 g/m².

La feuille réfléchissante de la feuille composite selon l'un quelconque des modes de réalisation ci-dessus possède une résistance à la rupture en traction mesurée selon la norme EN 12 311-1 supérieure à 300 N/5cm quelque soit le sens de traction (longitudinal ou transversal) et une résistance à la déchirure au clou mesurée selon la norme EN 12 310-1 supérieure à 250 N quelque soit le sens de traction (longitudinal ou transversal).

La feuille réfléchissante constituant la partie extérieure de la feuille composite du parement extérieur de l'isolant selon l'un quelconque des modes de réalisation ci-dessus est naturellement étanche à l'eau et à la vapeur d'eau. Afin de la rendre compatible avec l'usage recherché, elle est rendue perméable à l'eau et à la vapeur d'eau par un traitement spécifique approprié.

Ce traitement spécifique, réalisé par tous moyens mécaniques ou électriques appropriés, consiste à perforer cette feuille réfléchissante d'une multitude de trous répartis uniformément sur toute sa surface permettant ainsi le passage de la vapeur d'eau. Ces trous, dont le diamètre est généralement compris entre 0,1 mm et 1 mm, préférablement 0,5 mm, représentent environ 3% de la surface totale de la feuille réfléchissante.

La perforation de cette feuille réfléchissante conduit à une perméance W au minimum égale mais préférablement supérieure à celle de la feuille perméable à la vapeur d'eau et étanche à l'eau sur laquelle elle sera assujettie pour former la feuille composite constituant le parement extérieur.

Pour former cette feuille composite constituant le parement extérieur de l'isolant mince, la feuille réfléchissante réalisée selon l'une quelconque des versions ci-dessus est, après perforation, associée par collage, adhésivage, soudure, ou tout autre moyen analogue n'obturant pas les trous, à une feuille étanche à l'eau mais perméable à la vapeur d'eau du genre de celles décrites ci-dessus, le parement extérieur ainsi constitué est donc étanche à l'eau et perméable à la vapeur d'eau. Selon un mode préférentiel la feuille composite ci-dessus aura une feuille réfléchissante choisie parmi celle des versions décrites possédant un parement ou une armature en fibres non tissées permettant une meilleure répartition de la diffusion de la vapeur d'eau entre la feuille étanche à l'eau et la feuille réfléchissante percée.

Le parement réfléchissant intérieur de l'isolant mince est, selon un mode préférentiel, constitué d'une feuille réfléchissante choisie parmi l'une quelconque des versions décrites pour la feuille réfléchissante composant la feuille composite du parement extérieur.

Dans un premier mode de réalisation, la feuille réfléchissante est, après son percement, assemblée à la couche intercalaire formant matelas par collage, soudure ultra-sons ou tout autre moyen analogue.

Selon un second mode de réalisation la feuille réfléchissante n'est pas percée et donc totalement étanche à l'eau.

Selon le mode d'assemblage préférentiel, la feuille réfléchissante est assujettie à la couche intercalaire souple par aiguilletage, tricotage, ou tout autre assemblage mécanique équivalent, conduisant à son percement d'une multitude de trous rendant cette feuille non étanche à l'eau et à la vapeur d'eau.

En conséquence quel que soit le mode d'assemblage à la couche intermédiaire, la feuille réfléchissante ne pourra constituer que le parement intérieur non étanche à l'eau respirant de l'isolant mince dirigé vers l'intérieur du bâtiment-côté chaud.

La couche intercalaire souple hydrophobe, située entre les parements, forme un écarteur ayant pour principale fonction de maintenir entre les parements une distance constante. Cette couche intercalaire possède, en fonction secondaire, des propriétés d'isolation thermique susceptibles de réduire la conduction thermique des parements réfléchissants.

Cette couche intercalaire peut:
- selon un premier exemple, être constituée d'un matelas de fibres synthétiques ayant reçu un traitement hydrophobe liées entre elles par collage ou par des moyens mécaniques tels l'aiguilletage, la couture, ou par des moyens thermiques ou par tout autre moyen équivalent pour former un réseau tridimensionnel ou,
- selon un second exemple, être constituée d'une mousse expansée à cellules ouvertes d'une matière synthétique telle du polyéthylène, polyester, polyuréthane, ou toute autre matière synthétique équivalente, ou
- selon un troisième exemple, être constituée de fibres naturelles telles que de la laine de verre ou de roche ou des fibres d'origines végétales ou animales.

Avantageusement, cette couche intercalaire a une épaisseur comprise entre 5 mm et 20 mm, , la masse surfacique étant comprise entre 100 et 1000 g/m.

L'isolant thermique souple, mince et réfléchissant, possède un coefficient de conductivité thermique λ au plus égal à 0,04 W/m.K (watt par mètre. degré Kelvin).

Quel que soit le mode de fabrication, l'isolant mince peut comporter une bande adhésive incorporée en surface, positionnée dans la zone de recouvrement des lés, sur l'un des bords longitudinaux, et protégée par une pellicule, notamment en papier ou film, pelable qui sera enlevée lors de l'installation des lés d'isolant

L'invention est également relative à une isolation de toiture de bâtiment avec un isolant tel que défini précédemment, caractérisée en ce que l'isolant mince est disposé pour former une lame d'air inerte au-dessus d'une couche d'isolation, en étant continu en faîtage et replié verticalement, à ses extrémités latérales, contre la couche d'isolation.

L'invention consiste, mises à part les dispositions exposées ci-dessus, en un certain nombre d'autres dispositions dont il sera plus explicitement question ci-après à propos d'exemples de réalisation particuliers décrits avec référence aux dessins annexés, mais qui ne sont nullement limitatifs. Sur ces dessins:
Fig.1 est une vue schématique en coupe verticale partielle d'une toiture avec une nappe d'isolant mince réfléchissant selon l'invention.
Fig.2 est une coupe verticale à plus grande échelle d'une portion d'isolant thermique réfléchissant selon un premier mode de réalisation de l'invention.
Fig. 3 est une coupe verticale à plus grande échelle d'une portion d'isolant thermique réfléchissant selon une variante du premier mode de réalisation de l'invention.
Fig. 4 est une coupe verticale schématique à grande échelle d'un exemple de feuille composite réfléchissante pour le parement extérieur.
Fig.5 montre, semblablement à Fig.4, un autre exemple de feuille composite réfléchissante pour le parement extérieur.
Fig.6 montre, semblablement à Fig.4, un autre exemple de feuille composite réfléchissante pour le parement extérieur, et
Fig.7 montre, semblablement à Fig.4, encore un autre exemple de feuille composite réfléchissante pour le parement extérieur.

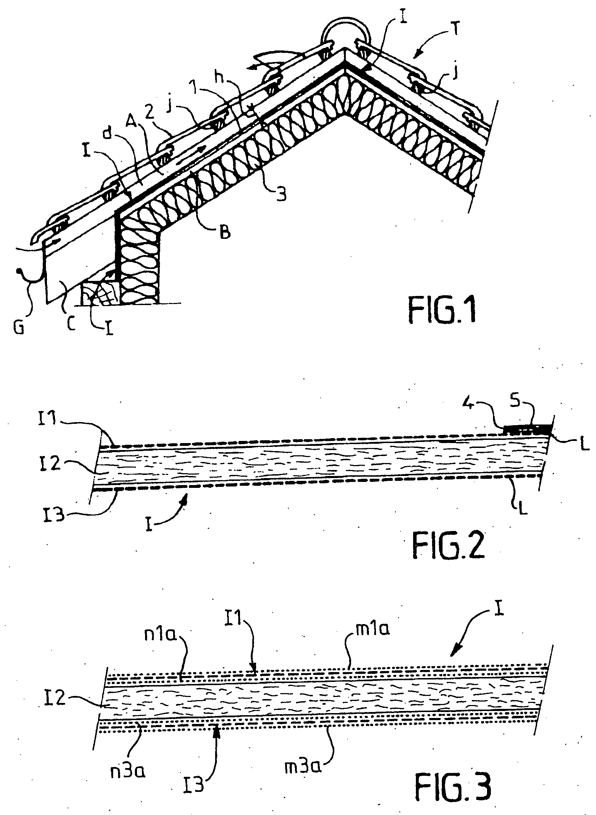

En se reportant à Fig.1 on peut voir une toiture T comportant des chevrons C en pente sur lesquels sont tendus des lés 1 d'un isolant thermique I souple mince et réfléchissant. Les lés se recouvrent par exemple sur leurs bords parallèles à la direction de mise en place, orthogonale à la ligne de plus grande pente de la toiture. En variante, les lés peuvent être orientés avec leur grande dimension parallèle à la ligne de plus grande pente et les bords qui se recouvrent sont alors parallèles à cette ligne.

L'isolant I comprend au moins trois éléments 11, 12, 13 constitués par un parement extérieur I1 et un parement intérieur 13 séparés par une couche intercalaire 12 constituée de fibres hydrophobes, ouverte au passage de la vapeur d'eau.

Des contre-lattes d, disposées au-dessus de l'isolant I le long des chevrons C, servent à la fixation par clouage de l'isolant I sur les chevrons. Des liteaux j, orthogonaux à la ligne de plus grande pente, sont fixés parallèlement les uns aux autres sur les contre-lattes d et permettent l'accrochage des éléments de toiture 2, par exemple des tuiles ou des ardoises.

Une lame A d'air de ventilation est ainsi formée entre la face supérieure de l'isolant I et la toiture. La hauteur h (Fig.1) de cette lame d'air A correspond à la hauteur de la contre-latte d. La lame d'air A débouche en partie basse au-dessus de la gouttière G et en partie haute communique avec l'atmosphère extérieure.

Une couche d'isolant thermique 3 , par exemple une couche de laine de verre, est fixée au-dessous de l'isolant I, à distance, de telle sorte que soit aménagée une lame d'air non ventilée B sous la face inférieure de l'écran I.

L'isolant mince peut comporter une bande adhésive 4 incorporée en surface, positionnée dans la zone de recouvrement des lés, sur l'un des bords longitudinaux, et protégée par une pellicule 5, notamment en papier ou film, pelable qui sera enlevée lors de l'installation des lés d'isolant.

L'isolant mince I est continu en faîtage et, à ses extrémités latérales, est replié verticalement contre la couche 3 d'isolation, sans espace susceptible de former une lame entre les deux parties verticales. La lame d'air B est inerte, puisque fermée en partie haute et en partie basse. Elle contribue à l'isolation thermique:

Le parement extérieur I1 est réfléchissant, étanche à l'eau, mais respirant, c'est-à-dire perméable à la vapeur d'eau. Le parement intérieur I3 est réfléchissant, respirant mais non étanche à l'eau. De ce fait,l'isolant I peut, sans inconvénient, être installé de l'extérieur au-dessus de la structure porteuse C et de l'isolation 3, et au-dessous des éléments de couverture 2, par exemple lors de la rénovation de la toiture. En effet la vapeur d'eau provenant de l'intérieur du bâtiment peut traverser l'isolant I perméable à la vapeur, de sorte qu'il n'y a pas de condensation de gouttelettes d'eau nuisibles pour la couche 3 d'isolation.

De préférence, l'isolant thermique I souple, mince et réfléchissant comporte, au moins vers l'extérieur, un parement I1 (Fig.2) dont la réflectivité est suffisante pour que l'isolant 1 permette une réduction sensible du facteur solaire de la toiture améliorant le confort d'été des occupants du bâtiment en évitant la surchauffe du volume intérieur, notamment des combles sous la toiture en pente.

Fig.3 montre une variante de l'isolant thermique I selon laquelle chaque parement réfléchissant respirant I1, 13 présente deux faces m1a, n1a, et m3a, n3a, faiblement émissives perméables à la vapeur d'eau.

Les parements I1, I3 ont une réflectivité suffisante pour renvoyer une partie du rayonnement infra rouge thermique qu'ils reçoivent sur chacune des faces.

En été, le rayonnement infra rouge thermique provenant de la couverture est réfléchi dans la lame d'air ventilée A (Fig.1), ménagée entre la couverture et l'isolant mince I, ce qui permet une réduction sensible du facteur solaire de la toiture et améliore le confort d'été des occupants du bâtiment en évitant ainsi la surchauffe du volume intérieur.

En hiver le rayonnement infra rouge thermique provenant de l'intérieur chauffé est réfléchi vers le volume habitable situé en dessous contribuant ainsi à limiter les pertes thermiques.

Les parements extérieur I1 et intérieur I3 de l'isolant mince réfléchissant ont avantageusement une émissivité hémisphérique moyenne spectrale ε généralement de 0,1 mais de préférence inférieure à 0,02 mesurée dans la bande de longueurs d'onde comprise entre 3 µm et 25 µm pour une température comprise entre 20°C et 60°C. La réflectivité moyenne est au minimum de 90%, de préférence supérieure à 98 %, de l'énergie totale reçue.

Le parement extérieur I1 de l'isolant thermique peut être constitué d'au moins une feuille L étanche à l'eau avec une perméabilité à la vapeur d'eau importante caractérisée par une valeur de perméance W exprimée en kg/m².s.Pa (kilo par mètre carré. seconde. Pascals) comprise entre 1.10⁻⁸ et 1.10⁻⁹ kg/m².s. Pa soit une hauteur d'air équivalente définie par la valeur Sd exprimée en mètre comprise entre 1.10⁻² m et 20.10⁻² m.

Cette feuille étanche à l'eau perméable à la vapeur d'eau peut être constituée de fibres synthétiques obtenues à partir d'un polymère pré-mélangé à un solvant sous haute pression et température élevée pour former une pâte qui, selon un processus adapté, est extrudée au travers d'orifices oscillants en filaments déposés en forte épaisseur sur un tapis métallique défilant, ces filaments sont ensuite liés entre eux par la pression et la chaleur apportée par une calandre afin de former une feuille continue.

La feuille peut être obtenue à partir de fibres synthétiques entrelacées avec d'infimes « espaces micrométriques » entre les fibres permettant le passage des molécules de vapeur d'eau tout en restant étanche à l'eau.

Avantageusement, cette feuille a une épaisseur comprise entre 100 µm et 300 µm et une masse surfacique entre 50 g/m² et 120 g/m². La feuille peut être obtenue à partir de fibres de matière synthétique à base de polyéthylène, ou toute autre matière synthétique présentant des propriétés analogues.

Dans un autre mode de réalisation, la feuille étanche à l'eau L perméable à la vapeur d'eau peut être constituée d'une très fine couche micro-poreuse se présentant sous forme d'un film contenant des micro-particules poreuses de silicate de chaux ou de toute autre matière poreuse analogue, dont l'épaisseur est généralement comprise entre 10 µm et 40 µm, avec une masse surfacique comprise entre 10g/m² et 40 g/m².

Selon une autre variante la feuille L est constituée d'une membrane perméable de nature chimique dite hydrophilique.

Les processus de fabrication de la feuille étanche à l'eau L et perméable à la vapeur d'eau objet de l'invention décrits ci-dessus ne constituent pas une quelconque limitation à d'autres procédés permettant l'obtention d'une feuille possédant des propriétés similaires.

Avantageusement, les feuilles L étanches à l'eau décrites ci-dessus constituant les parements 11, 13, de l'isolant mince I sont rendues faiblement émissives par un traitement approprié d'une des faces de ces feuilles. Ce traitement consiste en la dépose sous vide d'une couche de fines particules métalliques protégées par une laque transparente spécifique afin d'éviter une oxydation rapide de leur surface, qui réduirait sa réflectivité, tout en préservant leur perméance.

Selon une première variante (Fig.3), les deux faces du parement extérieur I1 et du parement intérieur I3 réfléchissant sont traitées pour être faiblement émissives.

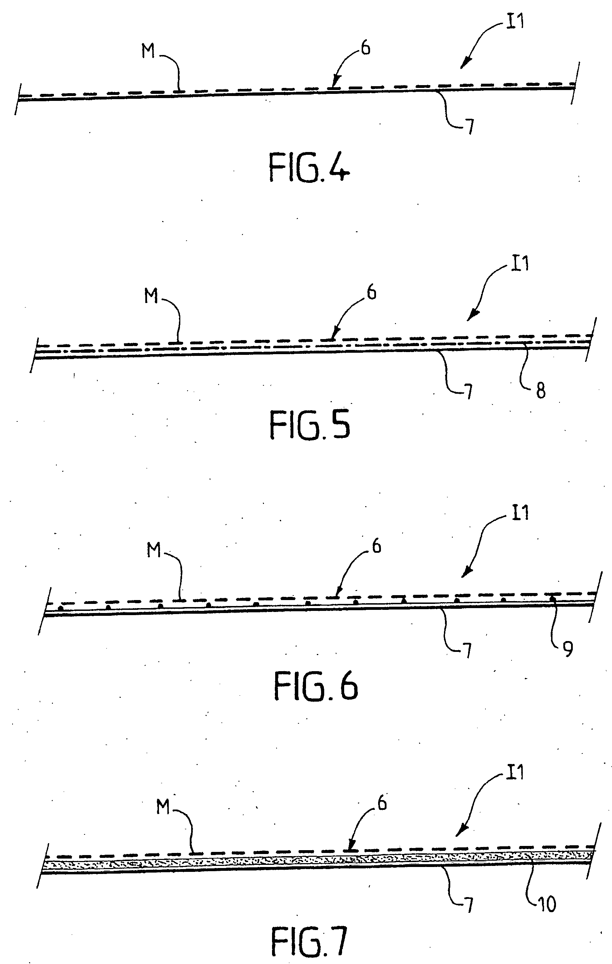

Selon d'autres modes de réalisation (Fig.4 à 7) le parement extérieur I1 de l'isolant mince est une feuille composite comportant une première feuille réfléchissante 6 perforée possédant une très faible émissivité et une seconde feuille étanche à l'eau L mais perméable à la vapeur d'eau 7 du genre de celles décrites ci-dessus. Dans un premier exemple (Fig.4) la feuille réfléchissante 6 est une feuille métallique M réfléchissante, en particulier en aluminium ou tout autre métal ayant des propriétés de réflexion similaires à celles de l'aluminium.

Avantageusement cette feuille métallique M est renforcée par des compléments associés par collage ou tout autre moyen équivalent ayant pour but de conférer à cette feuille métallique des propriétés mécaniques.

Selon une première disposition illustrée sur Fig.5, la feuille métallique M est associée à un film plastique armé multicouche transparent 8.

Selon une seconde disposition (Fig.6) la feuille métallique M est associée à une armature telle qu'une grille plastique 9 dont les fils de chaîne et les fils de trame sont judicieusement répartis afin d'en optimiser les performances.

Selon une troisième disposition (Fig.7) la feuille métallique réfléchissante M est associée à une armature constituée d'un film non tissé 10 de fibres synthétiques.

Dans un second exemple, la feuille réfléchissante 6 de la feuille composite ci-dessus est constituée d'un film réfléchissant multicouche armé.

Ce film réfléchissant multicouche armé est composé d'une première couche, formant l'un des parements, constituée d'un film plastique ayant reçu sur l'une de ses faces un dépôt sous vide de fines particules métalliques, et d'une seconde couche constituée d'un autre film transparent. Entre ces couches, est inséré une armature constituée d'une grille en matière plastique afin de conférer à ce film réfléchissant les propriétés mécaniques recherchées.

Les parements et l'armature sont assemblés entre eux au moyen d'une couche de collage extrudée entre les deux parements et l'armature ; alors que le film extrudé est encore en fusion, une pression exercée de part et d'autre par une calandre assure le collage et l'assemblage final.

En variante la seconde couche et l'armature peuvent être remplacées par un film non tissé de fibres synthétiques possédant des propriétés mécaniques similaire à celles de la grille plastique.

Les matières plastiques utilisées pour les films plastiques constituant les parements, la grille ou le film non tissé de fibres synthétiques sont composées de polymères courants tels le polyester, le polyéthylène, le polypropylène, ou tout autre polymère ayant des propriétés analogues utilisés seuls ou en combinaison.

Un tel film réfléchissant multicouche armé a une épaisseur totale comprise entre 60 et 200 µm et une masse comprise entre 60 et 250 g/m².

La feuille réfléchissante 6 de la feuille composite selon l'un des modes de réalisation ci-dessus possède une résistance à la rupture en traction mesurée selon la norme EN 12 311-1 supérieure à 300 N/5cm quetque soit le sens de traction (longitudinal ou transversal) et une résistance à la déchirure au clou mesurée selon la norme EN 12 310-1 supérieure à 250 N quelque soit le sens de traction (longitudinal ou transversal).

La feuille réfléchissante 6 constituant la partie extérieure de la feuille composite du parement extérieur I1 de l'isolant est naturellement étanche à l'eau et à la vapeur d'eau. Afin de la rendre compatible avec l'usage recherché, elle est rendue perméable à la vapeur d'eau par un traitement spécifique approprié.

Ce traitement spécifique, réalisé par tous moyens mécaniques ou électriques appropriés, consiste à perforer la feuille réfléchissante d'une multitude de trous répartis uniformément sur toute sa surface. Ces trous, dont le diamètre est généralement compris entre 0,1 mm et 1 mm, préférablement 0,5 mm, représentent environ 3% de la surface totale de la feuille réfléchissante.

Le percement de cette feuille réfléchissante conduit à une perméance W au minimum égale, mais préférablement supérieure, à celle de la feuille perméable à la vapeur d'eau et étanche à l'eau sur laquelle elle sera assujettie pour former la feuille composite constituant le parement extérieur.

Pour former cette feuille composite constituant le parement extérieur I1 de l'isolant mince, la feuille réfléchissante réalisée selon l'une des versons ci-dessus est, après percement, associée par collage, adhésivage, soudure, ou tout autre moyen analogue n'obturant pas les trous, à une feuille 7 étanche à l'eau, perméable à la vapeur d'eau.

Selon un mode préférentiel la feuille composite ci-dessus aura une feuille réfléchissante choisie parmi celles des versions décrites possédant un parement ou une armature en fibres non tissées permettant une meilleure répartition de la diffusion de la vapeur d'eau entre la feuille étanche à l'eau et la feuille réfléchissante percée.

Le parement réfléchissant intérieur 13 de l'isolant mince est, selon un mode préférentiel, constitué d'une feuille réfléchissante choisie parmi l'une des versions décrites pour la feuille réfléchissante 6 du parement extérieur.

Dans un premier mode de réalisation, la feuille réfléchissante est, percée selon le même procédé que celui décrit pour la feuille réfléchissante 6 du parement extérieur 11, puis est assemblée à la couche intercalaire I2 par collage, soudure ultra-sons ou tout autre moyen analogue n'obturant pas les trous pour le passage de la vapeur d'eau.

Selon un second mode de réalisation la feuille réfléchissante 6 n'est pas perforée et est donc totalement étanche à l'eau et à la vapeur d'eau . La feuille réfléchissante 6 est alors assujettie à la couche intercalaire I2 souple par aiguilletage, tricotage, ou tout autre assemblage mécanique équivalent. Ceci conduit au percement de la feuille réfléchissante du parement intérieur I3 selon une multitude de trous qui rendent cette feuille non étanche à l'eau et permet le passage de la vapeur d'eau.

En conséquence quel que soit le mode d'assemblage à la couche intermédiaire de la feuille réfléchissante, le parement intérieur 13 sera respirant et non étanche à l'eau. Ce parement I3 de l'isolant mince I est dirigé vers l'intérieur du bâtiment - côté chaud.

La couche intercalaire 12 souple hydrophobe, située entre les parements I1,I3, forme un écarteur ayant pour principale fonction de maintenir entre les parements une distance constante. Cette couche intercalaire possède, en fonction secondaire, des propriétés d'isolation thermique susceptibles de réduire la conduction thermique des parements réfléchissants.

Cette couche intercalaire peut:
- selon un premier exemple, être constituée d'un matelas de fibres synthétiques ayant reçu un traitement hydrophobe liées entre elles par collage ou par des moyens mécaniques tels l'aiguilletage, la couture, ou par des moyens thermiques ou par tout autre moyen équivalent pour former un réseau tridimensionnel ou,
- selon un second exemple, être constituée d'une mousse expansée à cellules ouvertes d'une matière synthétique telle du polyéthylène, polyester, polyuréthane, ou toute autre matière synthétique équivalente, ou
- selon un troisième exemple, être constituée de fibres naturelles telles que de la laine de verre ou de roche ou des fibres d'origines végétales ou animales.

Avantageusement, cette couche intercalaire a une épaisseur comprise entre 5 mm et 20 mm, la masse surfacique étant comprise entre 100 et 1000 g/m², L'isolant thermique I souple, mince et réfléchissant possède un coefficient de conductivité thermique λ égal ou inférieur à 0,04 W/m.K (watt par mètre, degré Kelvin).

Le processus de production peut comporter les étapes suivantes déroulage de la couche intercalaire 12, sur le parement intérieur I3 puis assemblage du parement intérieur I3 à la couche intercalaire I2 réalisé par aiguilletage, puis collage du parement extérieur I1 sur la couche intermédiaire I2, puis pressage, calandrage-chauffage, enroulage, découpe et conditionnement.

## Revendications

1. Isolant thermique souple, mince et réfléchissant, utilisable sous forme de feuille ou de nappe pour tous types de bâtiments, convenant à la fois aux travaux neufs ou aux travaux de rénovation, notamment pour améliorer l'ancienne isolation maintenue en place, comprenant au moins trois éléments constitués par un parement extérieur (11) réfléchissant respirant étanche à l'eau, et un parement intérieur respirant (13) dirigé vers l'intérieur du bâtiment-côté chaud, les deux parements étant séparés par une couche intercalaire (12) ouverte au passage de la vapeur d'eau, **caractérisé en ce que**:
- le parement intérieur respirant (13) est réfléchissant,
- le parement intérieur respirant (I3) est non étanche à l'eau, et
- la couche intercalaire (12) est constituée d'un matelas.

2. Isolant thermique selon la revendication 1, **caractérisé en ce que** la couche intercalaire (12) a une épaisseur comprise entre 5 mm et 20 mm.

3. Isolant thermique selon la revendication 1 ou 2, **caractérisé en ce que** la réflectivité moyenne des parements extérieur (I1) et intérieur (13) est au minimum de 90%.

4. Isolant thermique selon l'une quelconque des revendications précédentes, **caractérisé en ce que** le coefficient de conductivité thermique (λ) de l'isolant thermique est au plus égal à 0,04 W/m.K (watt par mètre. degré Kelvin).

5. Isolant thermique selon l'une quelconque des revendications précédentes, **caractérisé en ce que** le parement extérieur (11) de l'isolant thermique est constitué d'au moins une feuille (L) étanche à l'eau, ayant une perméabilité à la vapeur d'eau importante avec une valeur de perméance W comprise entre 1.10⁻⁸ et 1.10⁻⁹ kg/m².s.Pa.

6. Isolant thermique selon la revendication 5, **caractérisé en ce que** la feuille (L) a une épaisseur comprise entre 100µm et 300µm et une masse surfacique entre 50 g/m² et 120 g/m².

7. Isolant thermique selon la revendication 4 ou 5, **caractérisé en ce que** la feuille (L) étanche à l'eau est constituée d'une très fine couche micro-poreuse se présentant sous forme d'un film contenant des micro-particules poreuses de silicate de chaux ou de toute autre matière poreuse analogue, dont l'épaisseur est comprise entre 10 µm et 40 µm, avec une masse surfacique comprise entre 10g/m² et 40 g/m².

8. Isolant thermique selon la revendication 4 ou 5, **caractérisé en ce que** la feuille (L) est constituée d'une membrane perméable de nature chimique dite hydrophilique.

9. Isolant thermique selon l'une des revendication 4 à 8, **caractérisé en ce que** la feuille (L) étanche à l'eau est rendue faiblement émissive par un traitement approprié d'une des faces consistant en la dépose sous vide d'une couche de fines particules métalliques protégées par une laque transparente spécifique afin d'éviter une oxydation rapide de leur surface, qui réduirait sa réflectivité, tout en préservant leur perméance.

10. Isolant thermique selon la revendication 9, **caractérisé en ce que** les parements extérieurs réfléchissant (11, I3) de l'isolant comportent deux faces traitées faiblement émissives.

11. Isolant thermique selon l'une des revendications 1 à 9, **caractérisé en ce que** le parement extérieur réfléchissant (11) de l'isolant est une feuille composite comportant une première feuille réfléchissante (6) possédant une très faible émissivité perforée d'une multitude de trous, et une seconde feuille étanche à l'eau (L) perméable à la vapeur d'eau (7), ayant une perméabilité à la vapeur d'eau importante avec une valeur de perméance W comprise entre 1.10⁻⁸ et 1.10⁻⁹ kg/m².s.Pa, mais ne comportant pas de traitement en vue de la rendre faiblement émissive.

12. Isolant thermique selon la revendication 11, **caractérisé en ce que** la feuille réfléchissante (6) est une feuille métallique (M) réfléchissante.

13. Isolant thermique selon la revendication 12, **caractérisé en ce que** la feuille métallique (M) réfléchissante est en aluminium.

14. Isolant thermique selon la revendication 12 ou 13, **caractérisé en ce que** la feuille métallique (M) est renforcée par des compléments (8 ,9,10) associés par collage ou autre moyen équivalent, pour conférer à cette feuille métallique des propriétés mécaniques.

15. Isolant thermique selon la revendication 14, **caractérisé en ce que** la feuille métallique (M) est associée à un film plastique (8) armé multicouche transparent.

16. Isolant thermique selon la revendication 14, **caractérisé en ce que** la feuille métallique (M) est associée à une armature constituée d'une grille plastique (9).

17. Isolant thermique selon la revendication 14, **caractérisé en ce que** la feuille métallique (M) est associée à une armature constituée d'un film non tissé (10) de fibres synthétiques.

18. Isolant thermique selon la revendication 11, **caractérisé en ce que** la feuille réfléchissante (6) est constituée d'un film réfléchissant multicouche armé

19. Isolant thermique selon la revendication 11 ou 18, **caractérisé en ce que** la feuille réfléchissante (6) est perforée, d'une multitude de trous répartis uniformément sur toute sa surface, dont le diamètre est compris entre 0,1 mm et 1 mm, représentant environ 3% de la surface totale de la feuille.

20. Isolant thermique selon revendication 19, **caractérisé en ce que** la perméance W de la feuille réfléchissante (6) est égale ou supérieure à celle de la feuille étanche à l'eau (L) mais perméable à la vapeur d'eau (7)

21. Isolant thermique selon revendication 19 ou 20, **caractérisé en ce que** la feuille réfléchissante (6) perforée est associée par cottage, adhésivage, soudure, ou tout autre moyen analogue n'obturant pas les trous, à la feuille étanche à l'eau (L) mais perméable à la vapeur d'eau (7) pour constituer le parement extérieur (11) de l'isolant mince réfléchissant respirant

22. Isolant thermique selon l'une quelconque des revendications 13 à 17, **caractérisé en ce que** le parement réfléchissant (13) dirigé vers l'intérieur est constitué d'une feuille métallique réfléchissante (6) semblable à celle du parement extérieur (11).

23. Isolant thermique selon l'une des revendications 1 à 3, **caractérisé en ce que** le parement réfléchissant (13) dirigé vers l'intérieur est constitué d'un film réfléchissant multicouche armé

24. Isolant thermique selon la revendication 22 ou 23, **caractérisé en ce que** le parement réfléchissant (13) dirigé vers l'intérieur est perforé d'une multitude de trous répartis uniformément sur toute sa surface, dont le diamètre est compris entre 0,1 mm et 1 mm, représentant environ 3% de la surface totale de la feuille.

25. Isolant thermique selon la revendication 24, **caractérisé en ce que** la perméance W du parement intérieur perforé (13) est égale ou supérieure à celle du parement extérieur réfléchissant (11)

26. Isolant thermique selon la revendication 24 ou 25, **caractérisé en ce que** le parement réfléchissant intérieur perforé (I3) est assemblé à la couche intercalaire (12) par collage, soudure ultra-sons ou tout autre moyen analogue n'obturant pas les trous pour le passage de la vapeur d'eau

27. Isolant thermique selon les revendications 22 ou 23 , **caractérisé en ce que** le parement réfléchissant (I3) dirigé vers l'intérieur est associé par aiguilletage, tricotage, ou tout autre assemblage mécanique équivalent, conduisant à son percement d'une multitude de trous qui le rendent non étanche à l'eau et par lesquels la vapeur d'eau pourra s'échapper.

28. Isolant thermique selon la revendications 27, caractérisé en ce la perméance W du parement intérieur perforé (I3) est égale ou supérieure à celle du parement extérieur réfléchissant (I1)

29. Isolant thermique selon l'une des revendications précédentes, **caractérisé en ce que** les parements (I1) et (I3) ont une émissivité hémisphérique moyenne spectrale ε égale ou inférieure à 0,1 mesurée dans la bande de longueurs d'onde comprise entre 3 µm et 14 µm pour une température comprise entre 20°C et 60°C.

30. Isolant thermique selon la revendication 29, **caractérisé en ce que** la réflectivité moyenne des parements (11) et (13) est au minimum de 98% de l'énergie totale reçue.

31. Procédé de fabrication d'un isolant thermique souple, mince et réfléchissant et respirant selon l'une des revendications 1 à 25 ou 27 à 30, **caractérisé en ce que** le processus de production comprend les étapes suivante :
- déroulage de la couche intercalaire (I2) sur le parement intérieur (I3),
- assemblage du parement intérieur (I3) à la couche intercalaire (I2) par aiguilletage,
- collage du parement extérieur (I1) sur la couche intermédiaire (12).

## Patentansprüche

1. Flexible, dünne und reflektierende Wärmeisolierung, die in Form einer Folie oder einer Decke für jegliche Art von Gebäuden verwendbar und gleichzeitig für Neubauten und Renovierungsarbeiten geeignet ist, insbesondere zur Verbesserung der belassenen alten Isolierung, mit mindestens drei Elementen, welche durch eine reflektierende, atmungsaktive, wasserdichte äußere Verkleidung (I1) und eine dem Gebäudeinneren - der warmen Seite - zugewandte, atmungsaktive innere Verkleidung (13), wobei die beiden Verkleidungen durch eine für den Durchtritt von Wasserdampf offene Zwischenschicht (12) voneinander getrennt sind, **dadurch gekennzeichnet, dass**:
- die atmungsaktive innere Verkleidung (13) reflektierend ist,
- die atmungsaktive innere Verkleidung (13) nicht wasserdicht ist, und
- die Zwischenschicht (12) durch eine Matte gebildet ist.

2. Wärmeisolierung nach Anspruch 1, **dadurch gekennzeichnet, dass** die Zwischenschicht (12) eine Dicke zwischen 5 mm und 20 mm aufweist.

3. Wärmeisolierung nach Anspruch 1 oder 2, **dadurch gekennzeichnet, dass** der mittlere Reflektivitätsgrad der äußeren (I1) und der inneren Verkleidung (13) mindestens 90% beträgt.

4. Wärmeisolierung nach einem der vorhergehenden Ansprüche, **dadurch gekennzeichnet, dass** der Wärmeleitfähigkeitskoeffizient (λ) der Wärmeisolierung höchstens gleich 0,04 W/m.K (Watt pro Meter. Grad Kelvin) ist.

5. Wärmeisolierung nach einem der vorhergehenden Ansprüche, **dadurch gekennzeichnet, dass** die äußere Verkleidung (I1) der Wärmeisolierung aus mindestens einer wasserdichten Folie (L) besteht, die eine hohe Wasserdampfdurchlässigkeit mit einem Durchlässigkeitswert W zwischen 1.10⁻⁸ und 1.10⁻⁹ kg/m².s.Pa aufweist.

6. Wärmeisolierung nach Anspruch 5, **dadurch gekennzeichnet, dass** die Folie (L) eine Dicke zwischen 100 µm und 300 µm und ein Flächengewicht zwischen 50 g/m² und 120 g/m² aufweist.

7. Wärmeisolierung nach Anspruch 4 oder 5, **dadurch gekennzeichnet, dass** die wasserdichte Folie (L) durch eine sehr dünne mikroporöse Schicht gebildet ist, die in Form eines Films poröse Mikropartikel aus Kalk-Silikat oder einem anderen analogen porösen Material enthält, dessen Dicke zwischen 10 µm und 40 µm bei einem Flächengewicht zwischen 10 g/m² und 40 g/m² beträgt.

8. Wärmeisolierung nach Anspruch 4 oder 5, **dadurch gekennzeichnet, dass** die Folie (L) durch eine auf chemische Weise durchlässige, sogenannte hydrophile Membran gebildet ist.

9. Wärmeisolierung nach einem der Ansprüche 4 bis 8, **dadurch gekennzeichnet, dass** die wasserdichte Folie (L) durch eine geeignete Behandlung einer der Seiten geringfügig abstrahlend gemacht ist, welche in der Vakuumbeschichtung mit einer Lage feiner Metallpartikel besteht, die durch einen spezifischen transparenten Lack geschützt sind, um eine schnelle Oxidation ihrer Oberfläche zu verhindern, welche das Reflektivitätsvermögen derselben verringern würde, wobei ihre Durchlässigkeit gewahrt bleibt.

10. Wärmeisolierung nach Anspruch 9, **dadurch gekennzeichnet, dass** die reflektierenden äußeren Verkleidungen (I1, I3) der Isolierung zwei geringfügig abstrahlend behandelte Seiten aufweisen.

11. Wärmeisolierung nach einem der Ansprüche 1 bis 9, **dadurch gekennzeichnet, dass** die reflektierende äußere Verkleidung (11) der Isolierung eine Verbundfolie ist, die eine von einer Vielzahl von Löchern perforierte erste reflektierende Folie (6) mit einer sehr geringen Emissivität und eine für Wasserdampf (7) durchlässige, wasserdichte zweite Folie (L) aufweist, welche eine hohe Wasserdampfdurchlässigkeit mit einem Durchlässigkeitswert W zwischen 1.10⁻⁸ und 1.10⁻⁹ kg/m².s.Pa aufweist, jedoch nicht behandelt ist, um sie geringfügig abstrahlend zu machen.

12. Wärmeisolierung nach Anspruch 11, **dadurch gekennzeichnet, dass** die reflektierende Folie (6) eine reflektierende Metallfolie (M) ist.

13. Wärmeisolierung nach Anspruch 12, **dadurch gekennzeichnet, dass** die reflektierende Metallfolie (M) aus Aluminium besteht.

14. Wärmeisolierung nach Anspruch 12 oder 13, **dadurch gekennzeichnet, dass** die Metallfolie (M) durch Zusatzeinrichtungen (8, 9, 10) verstärkt ist, welche durch Kleben oder durch ein äquivalentes anderes Mittel mit dieser verbunden sind, um der Metallfolie mechanische Eigenschaften zu verleihen.

15. Wärmeisolierung nach Anspruch 14, **dadurch gekennzeichnet, dass** die Metallfolie (M) mit einem mehrlagigen, transparenten, verstärkten Kunststofffilm (8) verbunden ist.

16. Wärmisolierung nach Anspruch 14, **dadurch gekennzeichnet, dass** die Metallfolie (M) mit einer aus einem Kunststoffgitter (9) bestehenden Verstärkung verbunden ist.

17. Wärmeisolierung nach Anspruch 14, **dadurch gekennzeichnet, dass** die Metallfolie (M) mit einer Verstärkung verbunden ist, welche aus einem Nichtgewebtenfilm (10) aus Kunstfasern gebildet ist.

18. Wärmeisolierung nach Anspruch 11, **dadurch gekennzeichnet, dass** die reflektierende Folie (6) durch einen verstärkten, mehrlagigen, reflektierenden Film gebildet ist.

19. Wärmeisolierung nach Anspruch 11 oder 18, **dadurch gekennzeichnet, dass** die reflektierende Folie (6) von mehreren, gleichmäßig über deren gesamte Fläche verteilten Löchern durchsetzt ist, deren Durchmesser zwischen 0,1 mm und 1 mm betragen, was circa 3% der Gesamtfläche der Folie ausmacht.

20. Wärmeisolierung nach Anspruch 19, **dadurch gekennzeichnet, dass** die Durchlässigkeit W der reflektierenden Folie (6) gleich oder größer als diejenige der wasserdichten, jedoch für Wasserdampf (7) durchlässigen Folie (L) ist.

21. Wärmeisolierung nach Anspruch 19 oder 20, **dadurch gekennzeichnet, dass** die perforierte reflektierende Folie (6) durch Kleben, Haften, Schweißen oder jedes andere analoge Mittel, welches die Löcher nicht verschließt, mit der wasserdichten, jedoch für Wasserdampf (7) durchlässigen Folie (L) verbunden ist, um die äußere Verkleidung (I1) der dünnen, reflektierenden, atmungsaktiven Isolierung zu bilden.

22. Wärmeisolierung nach einem der Ansprüche 13 bis 17, **dadurch gekennzeichnet, dass** die nach innen gewandte reflektierende Verkleidung (13) aus einer reflektierenden Metallfolie (6) besteht, die derjenigen der äußeren Verkleidung (I1) ähnlich ist.

23. Wärmeisolierung nach einem der Ansprüche 1 bis 3, **dadurch gekennzeichnet, dass** die nach innen gewandte reflektierende Verkleidung (13) aus einem reflektierenden, mehrlagigen, verstärkten Film besteht.

24. Wärmeisolierung nach Anspruch 22 oder 23, **dadurch gekennzeichnet, dass** die nach innen gewandte reflektierende Verkleidung (13) von mehreren, gleichmäßig über deren gesamte Fläche verteilten Löchern durchsetzt ist, deren Durchmesser zwischen 0,1 mm und 1 mm betragen, was circa 3% der Gesamtfläche der Folie ausmacht.

25. Wärmeisolierung nach Anspruch 24, **dadurch gekennzeichnet, dass** die Durchlässigkeit W der perforierten inneren Verkleidung (13) gleich oder höher als diejenige der reflektierenden äußeren Verkleidung (I1) ist.

26. Wärmeisolierung nach Anspruch 24 oder 25, dass die perforierte innere Verkleidung (13) an der Zwischenschicht (12) durch Kleben, Ultraschallschweißen oder jedes andere Mittel, welches die Löcher für den Durchtritt von Wasserdampf nicht verschließt, angebracht ist.

27. Wärmeisolierung nach den Ansprüchen 22 oder 23, **dadurch gekennzeichnet, dass** die nach innen gewandte reflektierende Verkleidung (13) durch Vernadelung, Stricken oder jede andere äquivalente Art der mechanischen Verbindung angebracht ist, die zu einem Durchstechen derselben mit mehreren Löchern führt, welche diese nicht wasserdicht machen und über welche Wasserdampf entweichen kann.

28. Wärmeisolierung nach Anspruch 27, **dadurch gekennzeichnet, dass** die Durchlässigkeit W der perforierten inneren Verkleidung (13) gleich oder höher als diejenige der reflektierenden äußeren Verkleidung (I1) ist.

29. Wärmeisolierung nach einem der vorhergehenden Ansprüche, **dadurch gekennzeichnet, dass** die Verkleidungen (I1) und (13) einen hemisphärischen spektralen Emissionskoeffizienten ε gleich oder kleiner 0,1, gemessen in dem Wellenlängenband zwischen 3 µm und 14 µm bei einer Temperatur zwischen 20°C und 60°C, aufweist.

30. Wärmeisolierung nach Anspruch 29, **dadurch gekennzeichnet, dass** die mittlere Reflektivitätsfähigkeit der Verkleidungen (I1) und (13) mindestens 98% der gesamten empfangenen Energie beträgt.

31. Verfahren zur Herstellung einer flexiblen, dünnen und reflektierenden sowie atmungsaktiven Wärmeisolierung nach einem der Ansprüche 1 bis 25 oder 27 bis 30, **dadurch gekennzeichnet, dass** der Herstellungsprozess die folgenden Schritte aufweist:
- Aufrollen der Zwischenschicht (12) auf die innere Verkleidung (13),
- Verbinden der inneren Verkleidung (13) mit der Zwischenschicht (12) durch Vernadelung,
- Kleben der äußeren Verkleidung (I1) auf die Zwischenschicht (12).

## Claims

1. Reflective thin flexible thermal insulation which can be used in the form of a leaf or sheet for all types of buildings, and which is suitable both for new works or refurbishment works, in particular in order to improve old insulation which is kept in place, comprising at least three elements constituted by a breathable reflective outer cladding (I1) which is impermeable to water, and a breathable inner cladding (13) which faces towards the interior of the building (warm side), the two claddings being separated by an interposed layer (12) open to the passage of water vapour, **characterized in that**:
- the breathable inner cladding (13) is reflective;
- the breathable inner cladding (13) is not impermeable to water; and
- the interposed layer (12) is constituted by a mat.

2. Thermal insulation according to claim 1, **characterized in that** the interposed layer (12) has a thickness of between 5 mm and 20 mm.

3. Thermal insulation according to claim 1 or 2, **characterized in that** the mean reflectivity of the outer (I1) and inner (13) claddings is a minimum of 90%.

4. Thermal insulation according to any one of the preceding claims, **characterized in that** the coefficient of thermal conductivity (λ) of the thermal insulation is at the most equal to 0.04 W/m.K (watts per meter.degree Kelvin).

5. Thermal insulation according to any one of the preceding claims, **characterized in that** the outer cladding (I1) of the thermal insulation is constituted by at least one sheet (L) which is impermeable to water, with significant permeability to water vapour, with a permeation value W of between 1.10⁻⁸ and 1.10⁻⁹ kg/m².s.Pa.

6. Thermal insulation according to claim 5, **characterized in that** the sheet (L) has a thickness of between 100 µm and 300 µm, and a mass surface density of between 50 g/m² and 120 g/m².

7. Thermal insulation according to claim 4 or 5, **characterized in that** the sheet (L) which is impermeable to water is constituted by a very fine microporous layer in the form of a film containing porous micro-particles of lime silicate or any other similar porous material, the thickness of which is between 10 µm and 40 µm, with a mass surface density of between 10 g/m² and 40 g/m².

8. Thermal insulation according to claim 4 or 5, **characterized in that** the sheet (L) is constituted by a permeable membrane of a chemical nature known as hydrophilic.

9. Thermal insulation according to one of claims 4 to 8, **characterized in that** the sheet (L) which is impermeable to water is made slightly emissive by an appropriate treatment of one of the faces consisting of depositing under vacuum of a layer of fine metal particles protected by a specific transparent lacquer, in order to prevent rapid oxidation of their surface, which would reduce its reflectivity, whilst retaining their permeation.

10. Thermal insulation according to claim 9, **characterized in that** the reflective outer claddings (I1, I3) of the insulation comprise two slightly emissive treated faces.

11. Thermal insulation according to one of claims I to 9, **characterized in that** the reflective outer cladding (I1) of the insulation is a composite sheet comprising a first reflective sheet (6) with very low emissivity perforated with a multitude of holes, and a second sheet (L) which is impermeable to water and permeable to water vapour (7), having significant permeability to water vapour with a permeation value W of between 1.10⁻⁸ and 1.10⁻⁹ kg/m².s.Pa, but not comprising any treatment, in order to make it slightly emissive.

12. Thermal insulation according to claim 11, **characterized in that** the reflective sheet (6) is a reflective metal sheet (M).

13. Thermal insulation according to claim 12, **characterized in that** the reflective metal sheet (M) is made of aluminium.

14. Thermal insulation according to claim 12 or 13, **characterized in that** the metal sheet (M) is reinforced by complements (8, 9, 10) which are adhesively bonded or put together by another equivalent means in order to provide this metal sheet with mechanical properties.

15. Thermal insulation according to claim 14, **characterized in that** the metal sheet (M) is associated with a transparent multilayer reinforced plastic film (8).

16. Thermal insulation according to claim 14, **characterized in that** the metal sheet (M) is associated with a reinforcement constituted by a plastic mesh (9).

17. Thermal insulation according to claim 14, **characterized in that** the metal sheet (M) is associated with a reinforcement constituted by a non-woven film (10) of synthetic fibres.

18. Thermal insulation according to claim 11, **characterized in that** the reflective sheet (6) is constituted by a reinforced multilayer reflective film.

19. Thermal insulation according to claim 11 or 18, **characterized in that** the reflective sheet (6) is perforated with a multitude of holes distributed uniformly over all of its surface, the diameter of which is between 0.1 mm and 1 mm, representing approximately 3% of the total surface area of the sheet.

20. Thermal insulation according to claim 19, **characterized in that** the permeation W of the reflective sheet (6) is equal to, or greater than, that of the sheet (L) which is impermeable to water, but permeable to water vapour (7).

21. Thermal insulation according to claim 19 or 20, **characterized in that** the perforated reflective sheet (6) is adhesively bonded, adhesion, welding, or any other similar means which does not block the holes, with the sheet (L) which is impermeable to water but permeable to water vapour (7), in order to constitute the outer cladding (I1) of the breathable reflective thin insulation.

22. Thermal insulation according to any one of claims 13 to 17, **characterized in that** the reflective cladding (I3) which faces towards the interior is constituted by a reflective metal sheet (6) similar to that of the outer cladding (I1).

23. Thermal insulation according to one of claims 1 to 3, **characterized in that** the reflective cladding (13) which faces towards the interior is constituted by a reinforced multilayer reflective film.

24. Thermal insulation according to claim 22 or 23, **characterized in that** the reflective cladding (13) which faces towards the interior is perforated with a multitude of holes distributed uniformly over all of its surface, the diameter of which is between 0.1 mm and 1 mm, representing approximately 3% of the total surface area of the sheet.

25. Thermal insulation according to claim 24, **characterized in that** the permeation W of the perforated inner cladding (13) is equal to, or greater than, that of the reflective outer cladding (I1).

26. Thermal insulation according to claim 24 or 25, **characterized in that** the perforated inner reflective cladding (13) is assembled on the interposed layer (12) by adhesive bonding, ultrasound welding, or any other similar means which does not block the holes for the passage of the water vapour.

27. Thermal insulation according to claims 22 or 23, **characterized in that** the reflective cladding (I3) which faces towards the interior is associated by needling, knitting, or any other equivalent mechanical assembly, leading to it being pierced by a multitude of holes which make it not impermeable to water, and through which water vapour will be able to escape.

28. Thermal insulation according to claim 27, **characterized in that** the permeation W of the perforated inner cladding (13) is equal to, or greater than, that of the reflective outer cladding (I1).

29. Thermal insulation according to one of the preceding claims, **characterized in that** the claddings (I1) and (I3) have spectral mean hemispheric emissivity ε which is equal to or less than 0.1, measured in the wavelength band between 3 µm and 14 µm for a temperature of between 20°C and 60°C.

30. Thermal insulation according to claim 29, **characterized in that** the mean reflectivity of the claddings (I1) and (13) is a minimum of 98% of the total energy received.

31. Method for production of breathable reflective thin flexible thermal insulation according to one of claims 1 to 25 or 27 to 30, **characterized in that** the production process comprises the following steps:
- unrolling of the interposed layer (12) onto the inner cladding (13);
- assembly of the inner cladding (13) on the interposed layer (12) by means of needling;
- adhesive bonding of the outer cladding (I1) on the intermediate layer (12).
